(19) Europäisches Patentamt
European Patent Office
Office européen des brevets

(11) EP 3 998 315 A1

(12) **EUROPEAN PATENT APPLICATION**
published in accordance with Art. 153(4) EPC

(43) Date of publication:
**18.05.2022 Bulletin 2022/20**

(21) Application number: **20836397.8**

(22) Date of filing: **06.07.2020**

(51) International Patent Classification (IPC):
***C09D 5/16*** *(2006.01)* ***C09D 167/00*** *(2006.01)*
***C09D 167/02*** *(2006.01)* ***C09D 175/06*** *(2006.01)*
***C09D 175/08*** *(2006.01)* ***C09D 7/61*** *(2018.01)*
***C09D 7/63*** *(2018.01)*

(52) Cooperative Patent Classification (CPC):
**C09D 5/16; C09D 7/61; C09D 7/63; C09D 167/00; C09D 167/02; C09D 175/06; C09D 175/08**

(86) International application number:
**PCT/JP2020/026354**

(87) International publication number:
**WO 2021/006237 (14.01.2021 Gazette 2021/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.07.2019 JP 2019128813**

(71) Applicant: **Nitto Kasei Co., Ltd.**
**Osaka-shi**
**Osaka 533-0031 (JP)**

(72) Inventor: **MITOMI, Daisuke**
**Osaka-shi, Osaka 533-0031 (JP)**

(74) Representative: **Gulde & Partner**
**Patent- und Rechtsanwaltskanzlei mbB**
**Wallstraße 58/59**
**10179 Berlin (DE)**

# (54) ANTIFOULING COATING COMPOSITION AND COATED ARTICLE HAVING AT SURFACE THEREOF ANTIFOULING COATING FILM FORMED USING SAID COMPOSITION

(57) An antifouling coating composition which can improve workability during spray coating and adhesive property with an adherend, and can exhibit superior antifouling property in water, is provided. An antifouling coating composition including a terminal silane-modified resin (A1) and an antifouling agent (B); wherein: the terminal silane-modified resin (A1) is structured by modifying a part of or all of hydroxyl group in polyol (A) with alkoxysilane; the polyol (A) is one or more of polyester polyol (a1) and polyurethane polyol (a2); and the polyurethane polyol (a2) is structured by polyaddition of polyester polyol (a1) and/or polyether polyol (c) with polyisocyanate compound (b), is provided.

EP 3 998 315 A1

## Description

### TECHNICAL FIELD

The present invention relates to an antifouling coating composition, and to a coated object having an antifouling coating film formed by using the composition on the surface thereof.

### BACKGROUND

There has been a problem that aquatic fouling organisms such as barnacles, tubeworms, common mussels, *Bugula neritina,* sea squirts, green laver, sea lettuce, slime and the like adhere onto ships (especially ship bottom), fishing tools such as fishing nets and fishing net accessories, and underwater structures such as power generation plant conduit, resulting in degradation of the function of such ships and the like, or degraded appearance.

As one solution for such problem, a silicone rubber based antifouling coating which forms a coating film of a mixture of silicone rubber and silicone oil has been proposed (Patent Literatures 1 to 4). The coating film formed as such can prevent adhesion of organisms such as barnacles by its characteristics of low surface free energy and low modulus of elasticity. Further, a solution in which an antifouling agent such as copper pyrithione is formulated is also considered (Patent Literature 5).

### CITATION LIST

### PATENT LITERATURE

[Patent Literature 1] JP-A-S51-96830
[Patent Literature 2] JP-B-S56-26272
[Patent Literature 3] JP-A-S63-43973
[Patent Literature 4] JP-A-H3-255169
[Patent Literature 5] JP-A-2013-515122

### SUMMARY OF INVENTION

### TECHNICAL PROBLEM

However, when the silicone rubber based antifouling coating is being spray coated, it is necessary to widely cure the area around the coating area in order to prevent adhesion of dust. This results in extremely poor workability. In addition, due to poor adhesive property, there was a problem that the coating film would delaminate easily at the interface with the under coat.

The present invention has been made by taking the afore-mentioned problems into consideration. The present invention provides an antifouling coating composition which can improve workability during spray coating and adhesive property with an adherend, and can exhibit superior antifouling property in water.

### SOLUTION TO PROBLEM

According to the present invention, an antifouling coating composition comprising a terminal silane-modified resin (A1) and an antifouling agent (B); wherein: the terminal silane-modified resin (A1) is structured by modifying a part of or all of hydroxyl group in polyol (A) with alkoxysilane; the polyol (A) is one or more of polyester polyol (a1) and polyurethane polyol (a2); and the polyurethane polyol (a2) is structured by polyaddition of polyester polyol (a1) and/or polyether polyol (c) with polyisocyanate compound (b), is provided.

The present inventors have conducted intensive studies and have found that the antifouling coating composition having the afore-mentioned composition can solve the problems, thereby leading to completion of the present invention.

### MODE FOR CARRYING OUT THE INVENTION

Hereinafter, the present invention will be described in detail.

1. Antifouling Coating Composition

The antifouling coating composition of the present invention comprises a terminal silane-modified resin (A1) and an antifouling agent (B).

1-1. Terminal Silane-Modified Resin (A1)

The terminal silane-modified resin (A1) is structured by modifying all of or a part of the hydroxyl groups in the polyol (A) with alkoxysilane. The terminal silane-modified resin (A1) can be obtained by modifying all of or a part of the hydroxyl groups in the polyol (A) with a silane coupling agent (sc).

The silane modification ratio of the terminals of the terminal silane-modified resin (A1) is 0.1 to 1.0, preferably 0.3 to 0.95. The silane modification ratio is, particularly for example, 0.1, 0.2, 0.3, 0.4, 0.5, 0.6, 0.7, 0.8, 0.9, 0.95, or 1.0, and can be in the range between the two values exemplified herein. The silane modification ratio can be calculated by (molar number of hydroxyl group modified with alkoxysilane) / (total molar number of modified hydroxyl group and un-modified hydroxyl group). The silane modification ratio can also be calculated based on the molar ratio of the silane coupling agent (sc) with respect to the hydroxyl group in the polyol (A).

The weight average molecular weight (Mw) of the terminal silane-modified resin (A1) is preferably 2,000 to 100,000, more preferably 10,000 to 60,000. As the method for measuring Mw, gel permeation chromatography (GPC) can be mentioned for example.

As the manufacturing method of the terminal silane-modified resin (A1), for example, a method in which polyol (A) and silane coupling agent (sc) are mixed and heated as necessary to allow the hydroxyl group of the polyol (A) and the organic functional group of the silane coupling agent (sc) to react. This reaction can be performed under the presence of known curing catalyst. As the catalyst used when the silane coupling agent having an isocyanate group is used, for example, organometallic catalysts such as stannous octoate, dibutyltin dilaurate, dibutyltin diacetate, dioctyltin dilaurate, lead octanoate, lead naphthenate, nickel octanoate, cobalt octanoate, and iron octanoate; tertiary amine compound; and quaternary ammonium salt compound can be mentioned.

The amount of the silane coupling agent (sc) charged during the manufacture of the terminal silane-modified resin (A1) can be calculated from the following equation in the case where silane coupling agent having isocyanate group is used for example.

$$\text{amount of silane coupling agent (sc) charged (g)} = \text{PEOHV} \times (1-\text{ID}) \times \text{PEg} \times \text{SCM} \times \text{SCR} / 56110$$

PEOHV : hydroxyl group value of polyester polyol (a1) and polyether polyol (c) (mg·KOH/g)
ID : arbitrary isocyanate index ([NCO]/[OH] molar ratio)
PEg : amount of polyester polyol (a1) and polyether polyol (c) charged (g)
SCM : molecular weight of silane coupling agent (sc) ((3-(triethoxysilyl)propyl isocyanate (hereinafter abbreviated as ICPTES) = 247.37, 3-(trimethoxysilyl)propyl isocyanate (hereinafter abbreviated as ICPTMS) = 205.29)
SCR : arbitrary silane modification ratio (molar ratio of [silane coupling agent (sc)]/[ hydroxyl group of polyol (A)]

For example, when 100 g of polyester polyol (a1) having a hydroxyl group value of 56.0 and polyisocyanate compound (b) are reacted so as to have an isocyanate index of 0.8, and 50% of the remaining hydroxyl group are to be reacted with the silane coupling agent ICPTES, the silane modification ratio SCR would be 0.5, and the amount of the silane coupling agent ICPTES to be charged can be calculated as 2.5 g.

$$\text{amount of silane coupling agent ICPTES charged (g)} = 56.0 \times (1-0.8) \times 100 \times 247.37 \times 0.5 / 56110 = 2.5$$

The content of the terminal silane-modified resin (A1) in the composition of the present invention is not particularly limited. Here, in the solids of the antifouling coating composition of the present invention, the content of the terminal silane-modified resin (A1) is usually 5 to 70 mass%, preferably 10 to 50 mass%. When the content of the terminal silane-modified resin (A1) is 10 mass% to 50 mass%, antifouling effect can be exhibited sufficiently. Further, superior recoating performance can be exhibited with the coating film.

<Silane Coupling Agent (sc)>

The silane coupling agent (sc) is a compound which has within its molecule an organic functional group capable of reacting with the hydroxyl group, and an alkoxysilane group.
As the organic functional group, the one which can form a chemical bond with the hydroxyl group can be mentioned. As the chemical bond, urethane bond, ester bond, ether bond and the like can be mentioned. The alkoxysilane group is structured by bonding an alkoxy group to a Si atom. The number of alkoxy group bonded to the Si atom is 1, 2, or 3. As the alkoxy group, methoxy group, ethoxy group and the like can be mentioned. The organic functional group is bonded to the Si atom directly, or via other atoms. The number of intervening atom existing in between the organic functional group and the Si atom is, for example, 1 to 12, and particularly for example, 1, 2, 3, 4, 5, 6, 7, 8, 9, 10, 11, or 12, and can be in the range between the two values exemplified herein. As the intervening atom, carbon atom, nitrogen atom, oxygen atom and the like can be mentioned.
The silane coupling agent (sc) can be represented by the following general formula for example.

$$X\text{-}(CH_2)_n\text{-}Si\text{-}R^1a(OR^2)_{3\text{-}a}$$

X is an organic functional group which can react with a hydroxyl group, preferably an isocyanate group. n is 1 to 12, preferably 1 to 6.
As the $R^1$, alkyl group having 1 to 12 carbon atoms and phenyl group can be mentioned. The number of carbon atoms of the alkyl group is preferably 1 to 6, more preferably 1 to 4. As the alkyl group, methyl group, ethyl group and the like can be mentioned.
As the $R^2$, alkyl group having 1 to 4 carbon atoms, alkoxyalkyl group having 1 to 8 carbon atoms and the like can be mentioned. As the alkyl group, methyl group, ethyl group and the like can be mentioned. As the alkoxyalkyl group, 2-methoxyethyl group and the like can be mentioned.
a is 0, 1, or 2, and is preferably 0 or 1.
As a particular example of the silane coupling agent (sc) of the present invention, 3-(diethoxymethylsilyl)propyl isocyanate, ICPTES, 3-(dimethoxmethylysilyl)propyl isocyanate, ICPTMS, 3-trimethoxysilylpropyl succinic anhydride, 3-triethoxysilylpropyl succinic anhydride and the like can be mentioned.

<Polyol (A)>

Polyol (A) is one or more of polyester polyol (a1) and polyurethane polyol (a2).
The weight average molecular weight (Mw) of the polyol (A) is preferably 2,000 to 100,000, more preferably 10,000 to 60,000. As the method for measuring Mw, gel permeation chromatography (GPC) can be mentioned for example.

«Polyester Polyol (a1)»

The polyester polyol (a1) is represented by the following formula (1) or formula (2) .

[Chemical Formula 1]

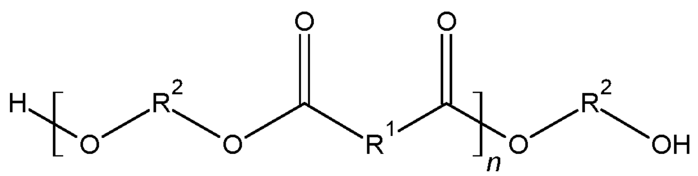

(1)

In the formula, n represents an integer of 1 to 100, preferably 3 to 50, and further preferably 5 to 30. n is, particularly for example, 1, 3, 5, 10, 15, 20, 25, 30, 35, 40, 45, 50, 60, 70, 80, 90, or 100, and can be in the range between the two values exemplified herein.
$R^1$ contained by the number of n is not particularly limited. Here, $R^1$ can be the same or different from each other. $R^1$ contained by the number of n are alkylene group or phenyl group, and are linear or branched. The number of carbon atoms in $R^1$ is, for example, 1 to 20, preferably 2 to 12. The number of carbon atoms is, particularly for example, 1, 2, 3, 4, 5, 6, 7, 8, 9, 10, 11, 12, 13, 14, 15, 16, 17, 18, 19, or 20, and can be in the range between the two values exemplified herein.
As the alkylene group, methylene group, ethylene group, propylene group, butylene group, pentylene group,

hexylene group, heptylene, oxtylene, nonylene, decylene and the like can be mentioned. These can be linear or can be branched.

As the phenylene group, 1,2-phenylene group, 1,3-phenylene group, and 1,4-phenylene group can be mentioned.

$R^2$ contained by the number of (n+1) are the same or different from each other. $R^2$ are alkylene group, or are group composed of polyethylene glycol or polypropylene glycol with 2 to 8 repeating units. The number of carbon atoms in the alkylene group of $R^2$ is, for example, 1 to 20, preferably 2 to 12. The number of carbon atoms is, particularly for example, 1, 2, 3, 4, 5, 6, 7, 8, 9, 10, 11, 12, 13, 14, 15, 16, 17, 18, 19, or 20, and can be in the range between the two values exemplified herein.

[Chemical Formula 2]

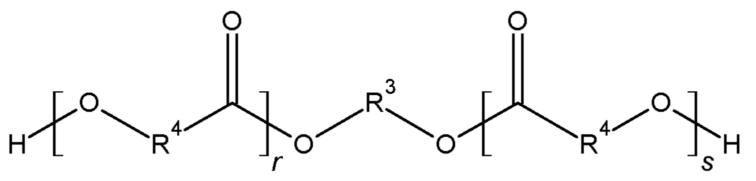

(2)

In formula (2), r and s each represents an integer of 0 to 100, and satisfies the relation of $r + s \geq 1$. Preferably, r and s are each 1 to 100, more preferably 3 to 50, and further preferably 5 to 30. r and s are each, particularly for example, 0, 1, 3, 5, 10, 15, 20, 25, 30, 35, 40, 45, 50, 60, 70, 80, 90, or 100, and can be in the range between the two values exemplified herein.

$R^3$ is an alkylene group, and can be a linear alkylene group or a branched alkylene group. The number of carbon atoms in $R^3$ is, for example, 1 to 20, preferably 2 to 12. The number of carbon atoms is, particularly for example, 1, 2, 3, 4, 5, 6, 7, 8, 9, 10, 11, 12, 13, 14, 15, 16, 17, 18, 19, or 20, and can be in the range between the two values exemplified herein.

$R^4$ contained by the number of (r+s) are the same or different from each other. $R^4$ is a linear alkylene group or a branched alkylene group. The number of carbon atoms in $R^4$ is, for example, 1 to 20, preferably 2 to 12. The number of carbon atoms is, particularly for example, 1, 2, 3, 4, 5, 6, 7, 8, 9, 10, 11, 12, 13, 14, 15, 16, 17, 18, 19, or 20, and can be in the range between the two values exemplified herein.

The polyester polyol (a1) represented by formula (1) is a product obtained by reacting an acid component including the dicarboxylic acid represented by the following formula (3) or derivatives thereof with a polyalcohol including the diol compound represented by the following formula (4) to undergo an esterification reaction or trans-esterification reaction.

$$HOOC\text{-}R^1\text{-}COOH \qquad (3)$$

$$HO\text{-}R^2\text{-}OH \qquad (4)$$

The acid component including the dicarboxylic acid represented by the formula (3) or derivatives thereof is, particularly for example, dicarboxylic acid such as oxalic acid, succinic acid, maleic acid, malonic acid, adipic acid, sebacic acid, azelaic acid, fumaric acid, citraconic acid and the like; aromatic dicarboxylic acid such as phthalic acid, isophthalic acid, terephthalic acid and the like; alicyclic dicarboxylic acid such as cyclohexane dicarboxylic acid and the like; or derivatives of these such as lower alkyl ester (for example, ester of alkyl having 1 to 4 carbon atoms); or acid anhydride, halogenated acyl of these can be mentioned.

As the polyalcohol including the diol compound represented by formula (4), particularly for example, ethylene glycol, diethylene glycol, triethylene glycol, tetraethylene glycol, 1,2-propanediol, 1,3-propanediol, 1,3-butanediol, 1,2-butanediol, 1,4-butanediol, 1,5-pentanediol, neopentyl glycol, 1,6-hexanediol, 3-methyl-1,5-pentanediol, 1,9-nonanediol, 1,4-cyclohexanediol, 1,4-cyclohexanedimethanol, 2-methyl-1,8-octanediol, 2-methyl-1,3-propanediol, 2,2-diethyl-1,3-propanediol, 2-butyl-2-ethyl-1,3-propanediol, 2-ethyl-1,3-hexanediol, 2,4-diethyl-1,5-pentanediol, bisphenol A, hydrogenated bisphenol A, bisphenol A and hydrogenated bisphenol A, ethylene oxide adducts or propylene oxide adducts of various diols can be mentioned.

These alcohols can be used alone, or two or more of these can be used in combination.

The polyester polyol (a1) of formula (2) is a product obtained by ring-opening polymerization of 50 to 100 mass% of lactone compounds selected from the group consisting of ε-caprolactone, δ-valerolactone, γ-butyrolactone, β-propiolactone, and α-acetolactone; and less than 50 mass% of other polymerizable cyclic esters including DL-lactide, L-lactide, glycolide, and 1,4-dioxan-2-one; by using the polyalcohol including the diol compound represented by formula

(4) as the initiator.

The hydroxyl group value of polyester polyol (a1) is measured in accordance with the Standard methods for the analysis of fats, oils and related materials 2.3.6.2-1996 (hereinafter referred to as "Analysis Method") established by public interest incorporated association, Japan Oil Chemists' Society. The value is 5 to 300 mg·KOH/g, preferably 10 to 150 mg·KOH/g. The hydroxyl group value is, particularly for example, 5, 10, 20, 30, 40, 50, 60, 70, 80, 90, 100, 110, 120, 130, 140, 150, 200, 250, or 300 mg·KOH/g, and can be in the range between the two values exemplified herein.

The acid value of polyester polyol (a1) is measured in accordance with 2.3.1-2013 of the Analysis Method, and is preferably 2 mg·KOH/g or less, more preferably 0.5 mg·KOH/g or less. The acid value is, for example, 0.01 to 2 mg·KOH/g, and is particularly for example, 0.01, 0.05, 0.1, 0.2, 0.3, 0.4, 0.5, 0.6, 0.7, 0.8, 0.9, 1, 1.1, 1.2, 1.3, 1.4, 1.5, 1.6, 1.7, 1.8, 1.9, or 2 mg·KOH/g, and can be in the range between the two values exemplified herein.

As the polyester polyol (a1), a commercially available product can be used. For example, TL series of TL 2450, 2455, 2459, 2460, 2461, 2462, 2464, 2469, 2471, 2477, 2490, TA22-325B and the like (available from Showa Denko Materials Co., Ltd., product name); NIPPOLAN series of NIPPOLAN 163, 1004 and the like (available from Tosoh Corporation, product name); HS2N-221A, HS2N-226P, HS2P-103S, HS2H-179A (available from HOKOKU CORPORATION, product name); KURARAY POLYOL P-1012, P-1020, P-2010, P-2011, P-2030, P-2050, P-6010 (available from Kuraray Co., Ltd., product name); SANESTER series of SANESTER No. 22, No. 24620 (available from Sanyo Chemical Industries, Ltd., product name) and the like can be mentioned.

The polyester polyol (a1) of formula (1) can be manufactured for example by or trans-esterification reaction or esterification reaction of the acid component and the polyalcohol. In particular, the polyester polyol (a1) of formula (1) can be manufactured by formulating acid component and polyalcohol, and then performing esterification reaction or trans-esterification reaction by known manufacturing method, such as melting method, solvent method (reflux method) using toluene, xylene and the like for example under presence of a catalyst such as organic titanium compound, organic tin compound and the like at 180 to 250 °C.

The polyester polyol (a1) of formula (2) can be manufactured for example by ring-opening polymerization of lactone compound. In particular, lactone compound and polyalcohol as initiator are formulated, and ring-opening polymerization can be carried out by known manufacturing method under the presence of catalyst such as organic titanium compound, organic tin compound and the like at 130 to 220 °C.

«Polyurethane Polyol (a2)>>

The polyurethane polyol (a2) is structured by polyaddition of polyester polyol (a1) and/or polyether polyol (c) with polyisocyanate compound (b). Both terminals of the polyurethane polyol (a2) are preferably hydroxyl group.

Among the polyurethane polyol (a2), the one obtained by performing urethanization reaction with a charging ratio of polyester polyol (a1) and polyisocyanate compound (b) to have an isocyanate index (NCO/OH) of 0.1 to 0.99 is especially preferable in terms of long term antifouling property.

Suitable isocyanate index (NCO/OH) is 0.1 to 0.99, and more preferably 0.2 to 0.95. This value is, particularly for example, 0.1, 0.2, 0.3, 0.4, 0.5, 0.6, 0.7, 0.8, 0.9, 0.95, or 0.99, and can be in the range between the two values exemplified herein.

The hydroxyl group value of the polyurethane polyol (a2) is 5 to 100 mg·KOH/g, more preferably 10 to 50 mg·KOH/g. The hydroxyl group value is, particularly for example, 5, 10, 20, 30, 40, 50, 60, 70, 80, 90, or 100, and can be in the range between the two values exemplified herein.

The hydroxyl group value of polyurethane polyol (a2) is a value measured in accordance with 2.3.6.2-1996 of the Analysis Method, or is a value calculated from the charged ratio of polyester polyol (a1) and/or polyether polyol (c) and polyisocyanate (b) by assuming that the isocyanate group are completely reacted with the hydroxyl group of the polyester polyol (a1) and/or polyether polyol (c).

The polyurethane polyol (a2) can be manufactured for example by performing an urethanization reaction by mixing the materials with a charging ratio of polyester polyol (a1) and/or polyether polyol (c) and polyisocyanate compound (b) to have an isocyanate index (NCO/OH) of 0.1 to 0.99 at 20 to 140 °C.

The reaction can be carried out under the presence of known curing catalyst. As the known curing catalyst, the ones exemplified in the explanation of the manufacturing method of the terminal silane-modified resin (A1) can be used.

(Polyisocyanate Compound (b))

The polyisocyanate compound (b) is a compound having 2 or more isocyanate group within its molecule. The number of isocyanate groups contained in the molecule is, for example, 2 to 6, preferably 2 to 3, and further preferably 2. As the polyisocyanate compound (b), alkylene diisocyanate such as trimethylene diisocyanate, trimethylhexamethylene diisocyanate, tetramethylene diisocyanate, hexamethylene diisocyanate; cycloalkylene based diisocyanate such as bis(isocyanatomethyl)cyclohexane, cyclopentane diisocyanate, cyclohexane diisocyanate, isophorone diisocyanate;

aromatic diisocyanate such as tolylene diisocyanate, phenylene diisocyanate, diphenylmethane diisocyanate, diphenyl ether diisocyanate; aliphatic diisocyanate with aromatic ring such as xylylene diisocyanate and diisocyanate diethylbenzene; triisocyanate such as triphenylmethane triisocyanate, benzene triisocyanate, and toluene triisocyanate; tetraisocyanate such as diphenyl dimethylmethane tetraisocyanate; polyisocyanate such as dimer and trimer of isocyanate, such as uretdione, allophanate, trimethylolpropane adduct, isocyanurate product, and biuret product of hexamethylene diisocyanate, tolylene diisocyanate, isophorone diisocyanate and the like; can be mentioned. Here, hexamethylene diisocyanate, cyclohexane diisocyanate, isophorone diisocyanate, tolylene diisocyanate, and diphenylmethane diisocyanate are preferable. These polyisocyanate compounds can be used alone, or two or more of these can be used in combination.

(Polyether Polyol (c))

The polyether polyol (c) is a product obtained by addition polymerization of either one of or both of propylene oxide and ethylene oxide by using polyalcohol including diol compound as the initiator.

The polyalcohol including diol compound as the initiator is not particularly limited. Here, particularly for example, ethylene glycol, diethylene glycol, triethylene glycol, tetraethylene glycol, 1,2-propanediol, 1,3-propanediol, 1,3-butanediol, 1,2-butanediol, 1,4-butanediol, 1,5-pentanediol, neopentyl glycol, 1,6-hexanediol, 3-methyl-1,5-pentanediol, 1,9-nonanediol, 1,4-cyclohexanediol, 1,4-cyclohexanedimethanol, 2-methyl-1,8-octanediol, 2-methyl-1,3-propanediol, 2,2-diethyl-1,3-propanediol, 2-butyl-2-ethyl-1,3-propanediol, 2-ethyl-1,3-hexanediol, 2,4-diethyl-1,5-pentanediol, bisphenol A, hydrogenated bisphenol A, bisphenol A and hydrogenated bisphenol A, glycerin, trimethylolpropane, pentaerythritol and the like can be mentioned. These alcohols can be used alone, or two or more of these can be used in combination.

The hydroxyl group value is measured in accordance with 2.3.6.2-1996 of the Analysis Method, and is 5 to 300 mg·KOH/g, further preferably 10 to 150 mg·KOH/g. The hydroxyl group value is, particularly for example, 5, 10, 20, 30, 40, 50, 60, 70, 80, 90, 100, 110, 120, 130, 140, 150, 200, 250, or 300 mg·KOH/g, and can be in the range between the two values exemplified herein.

As the polyether polyol (c), commercially available product can be used. For example, UNIOL D series (available from NOF CORPORATION, product name); and SANNIX PP series and SANNIX GP series (available from Sanyo Chemical Industries, Ltd., product name) can be mentioned.

1-2. Antifouling Agent (B)

As the antifouling agent (B), there is no particular limitation so long as it is a substance having a killing or repellent effect to marine fouling organisms. For example, an inorganic chemical and an organic chemical can be mentioned.

As the inorganic chemical for example, cuprous oxide, cuprous thiocyanate (generic name: copper rhodanide), cupro-nickel, copper powder and the like can be mentioned. Among these, cuprous oxide and copper rhodanide are particularly preferable.

As the organic chemical for example, organic copper compounds such as copper 2-mercaptopyridine-N-oxide (generic name: copper pyrithione) and the like; organic zinc compounds such as zinc 2-mercaptopyridine-N-oxide (generic name: zinc pyrithione), zinc ethylenebis(dithiocarbamate) (generic name: zineb), zinc bis(dimethyldithiocarbamate) (generic name: ziram), bis(dimethyldithiocarbamate) ethylenebis(dithiocarbamate)dizinc (generic name: polycarbamate) and the like; organic boron compounds such as pyridine-triphenylborane, 4-isopropylpyridine-diphenylmethylborane, 4-phenylpyridine-diphenylborane, triphenylboron-n-octadecylamine, triphenyl[3-(2-ethylhexyloxy)propylamine]boron and the like; maleimide compounds such as 2,4,6-trichloromaleimide, N-(2,6-diethylphenyl) 2,3-dichloromaleimide and the like; and other compounds such as 4,5-dichloro-2-n-octyl-3-isothiazolone (generic name: Sea-nine 211), 3,4-dichlorophenyl-N-N-dimethylurea (generic name: Diuron), 2-methylthio-4-t-butylamino-6-cyclopropylamino-s-triazine (generic name: Irgarol 1051), 2,4,5,6-tetrachloroisophthalonitrile (generic name: Chlorothalonil), N-dichlorofluoromethylthio-N',N'-dimethyl-N-p-tolylsulfamide (generic name: Tolylfluanid), N-dichloromethylthio-N',N'-dimethyl-N-phenylsulfamide (generic name: Dichlofluanid), 2-(4-thiazolyl)benzimidazole (generic name: Thiabendazole), 3-(benzo[b]thien-2-yl)-5,6-dihydro-1,4,2-oxathiazine-4-oxide (generic name: Bethoxazin), 2-(p-chlorophenyl)-3-cyano-4-bromo-5-trifluoromethyl pyrrole (generic name: ECONEA 028), (±)-4-[1-(2,3-dimethylphenyl)ethyl]-1H-imidazole (generic name: Medetomidine) and the like can be mentioned. Among these, zinc pyrithione, copper pyrithione, pyridine-triphenylborane, 4-isopropylpyridine-diphenylmethylborane, Bethoxazin, Zineb, Sea-nine 211, and Irgarol 1051 are preferable, and copper pyrithione, zinc pyrithione, pyridine-triphenylborane, and Bethoxazin are more preferable.

As the antifouling agent (B), cuprous oxide, copper rhodanide, zinc pyrithione, copper pyrithione, pyridine-triphenylborane, 4-isopropylpyridine-diphenylmethylborane, Bethoxazin, Zineb, Sea-nine 211, Irgarol 1051, Tolylfluanid, and Dichlofluanid are preferable, and cuprous oxide, copper pyrithione, zinc pyrithione, pyridine-triphenylborane, and Bethoxazin are more preferable.

These antifouling agents can be used alone or two or more of these can be used in combination.

The content of the antifouling agent (B) in the composition of the present invention is not particularly limited. Here, the content in the solids of the composition of the present invention is usually 0.1 to 75 mass%, preferably 1 to 60 mass%. When the content of the antifouling agent (B) is less than 0.1 mass%, sufficient antifouling effect may not be achieved. When the content of the antifouling agent (B) exceeds 75 mass%, the coating film formed would become weak, and the adhesive property with the object onto which the coating film is formed would become weak. Therefore, function as the antifouling coating film cannot be fully realized.

The antifouling coating composition of the present invention can further contain a release accelerator (C), a plasticizer (D), and other resin (E) in addition to the terminal silane-modified resin (A1) and the antifouling agent (B) if necessary.

1-3. Release Accelerator (C)

As the release accelerator (C), straight silicone oil composed of polydimethylsiloxane and organic modified silicone oil which is an organic modified substance thereof can be mentioned. By formulating the release accelerator in the coating, release of the antifouling agent into seawater can be accelerated and thus antifouling property can be improved.

As an example of organic modification, introduction of alkyl, phenyl, aralkyl, polyethylene glycol, polypropylene glycol and the like at the side chain or at the terminal of the polydimethylsiloxane can be mentioned.

The content of the release accelerator (C) is usually 1 to 50 parts by mass, preferably 5 to 30 parts by mass with respect to 100 parts by mass of the terminal silane-modified resin (A1).

1-4. Plasticizer (D)

By allowing the antifouling coating composition of the present invention to include the plasticizer (D), plasticity of the composition can be improved. Accordingly, a tough coating film can be suitably formed.

As the plasticizer (D) for example, phosphoric acid ester such as tricresyl phosphate, trioctyl phosphate, triphenyl phosphate and the like; phthalic acid ester such as dibutyl phthalate, dioctyl phthalate and the like; adipic acid ester such as dibutyl adipate, dioctyl adipate and the like; sebacic acid ester such as dibutyl sebacate, dioctyl sebacate and the like; epoxidized oil such as epoxidized soybean oil, epoxidized linseed oil and the like; alkyl vinyl ether polymer such as methyl vinyl ether polymer, ethyl vinyl ether polymer and the like; polyalkylene glycol such as polyethylene glycol, polypropylene glycol and the like; t-nonylpentasulfide; Vaseline; polybutene; tris(2-ethylhexyl)trimellitate; liquid paraffin; chlorinated paraffin and the like can be mentioned. These plasticizers can be used alone, or two or more of these can be used in combination.

The content of the plasticizer (D) in the composition of the present invention is usually 0.1 to 20 parts by mass, preferably 0.5 to 10 parts by mass with respect to 100 parts by mass of the terminal silane-modified resin (A1).

1-5. Other Resin (E)

By allowing the antifouling coating composition of the present invention to include other resin (E), cost can be reduced without deteriorating the effect of the present invention. In addition, synergistic effect with the property of the resin (E) can be obtained.

As the other resin (E) for example, (meth)acrylic resin, alkyd resin, polyester resin, chlorinated rubber resin, vinyl resin, silicone resin having both terminals modified with silanol, polypropylene glycol having moth terminals modified with alkoxysilane, the afore-mentioned polyol (A) and the like can be mentioned.

The other resin (E) in the composition of the present invention can be contained in a range which does not deteriorate antifouling effect. Such content is preferably 1 to 200 parts by mass, more preferably 5 to 50 parts by mass with respect to 100 parts by mass of the terminal silane-modified resin (A1).

1-6. other additives

Further, if necessary, the antifouling coating composition of the present invention can further contain pigment, dye, antifoaming agent, anti-sagging agent, dispersant, anti-settling agent, dehydrating agent, organic solvent and the like, in a range which does not deteriorate adequate coating film dissolution speed and coating film property in seawater.

2. Manufacturing Method of Antifouling Coating Composition

The antifouling coating composition of the present invention can be manufactured by mixing and dispersing a

mixture solution containing the terminal silane-modified resin (A1), antifouling agent (B), and other additives.

Regarding the terminal silane-modified resin (A1), a pigment paste can be first prepared by dispersing a mixture solution containing the composition other than the terminal silane-modified resin (A1), that is, antifouling agent (B) and other additives and the like using a disperser. Subsequently, the pigment paste can be mixed with the terminal silane-modified resin (A1) and then amine based catalyst or metal catalyst can be added immediately before application.

The content of the resin, antifouling agent and the like in the mixture solution shall be adjusted so that the content of the resin, antifouling agent and the like in the antifouling coating composition would be satisfied.

Regarding the mixture solution, the ingredients such as resin, antifouling agent and the like are preferably dissolved or dispersed in the solvent.

As the solvent, there is no particular limitation so long as there is no reactivity with the silane group of the terminal silane-modified resin (A1), and can dissolve the terminal silane-modified resin (A1) and other resin component. Here, one or more of xylene, toluene, mineral spirit, butyl acetate, methyl isobutyl ketone, methyl ethyl ketone are preferable.

As the disperser for example, the one which can be used as a micro-pulverizer can be suitably used. For example, a commercially available homo mixer, sand mill, bead mill and the like can be used. Furthermore, the mixed solution can be mixed and dispersed by using a stirrer-equipped container containing glass beads for mixing and dispersing.

3. Antifouling Treatment Method, Antifouling Coating Film, and Coated Object

In the antifouling treatment method of the present invention, amine based catalyst or metal catalyst is added to the antifouling coating composition, and an antifouling coating film is promptly formed on the surface of the object onto which the coating film is formed. Then, usually, the silane group of the terminal silane-modified resin (A1) undergoes gradual hydrolysis by the moisture in the air and undergoes condensation to form a siloxane bond. Accordingly, a crosslinked coating film or a coating film with increased molecular weight is obtained. According to the antifouling treatment method of the present invention, the antifouling agent gradually dissolve from the surface of the antifouling coating film, thereby preventing adhesion of aquatic fouling organisms.

As the amine based catalyst, for example, 1-amino-2-ethylhexane, 3-(trimethoxysilyl)propylamine, N-2-aminoethyl-3-aminopropyl trimethoxysilane, N,N,N',N'-tetramethyl-N"-[3-(trimethoxysilyl)propyl]guanidine, 3-triethoxysilyl-N-(1,3-dimethylbutylidene)propylamine and the like can be mentioned.

As the metal catalyst, for example, organotin compound such as dibutyltin dilaurate, dibutyltin bis(acetylacetonate), and dibutyl bis(2,4-pentanedionato)tin(IV); organotitanate such as tetrabutyl titanate and tetraisopropyl titanate; organotitanium chelate such as diisopropoxy bis(acetylacetonate)titanium and diisopropoxy bis(ethylacetoacetate)titanium; organic aluminum compound such as aluminum tris(acetylacetonate) and aluminum tris(ethylacetoacetate); organic zirconium compound such as zirconium tetra(acetylacetonate) and zirconium tetrabutyrate and the like can be mentioned.

These amine based catalysts and metal crystals can be used alone, or two or more of these can be used in combination. The addition amount is usually 0.05 to 10 parts by mass, preferably 0.5 to 5 parts by mass with respect to 100 parts by mass of the terminal silane-modified resin (A1).

As the object onto which the coating film is formed, for example, ships (especially ship bottoms), fishing tools, underwater structures and the like can be mentioned. Examples of the fishing tools include fishing nets for use in aquaculture or in fixed netting, and fishing net accessories such as ropes and floats attached to fishing nets. Examples of the underwater structures include power generation plant conduits, bridges, and port facilities.

The antifouling coating film can be formed by applying the antifouling coating composition onto the surface (entirely or partially) of an object onto which the coating film is formed. Examples of the coating method include brush coating, spray coating, dipping, flow coating, and spin coating. These coating methods can be employed alone or two or more of these can be employed in combination. The coating composition is dried after the application to allow hydrolysis of the silane group by moisture followed by condensation. The drying temperature can be room temperature. The drying time can be suitably selected depending on the thickness of the coating film and the like.

Application of the antifouling coating composition can be performed by applying the composition one time, or by overcoating the composition by plurality of times by known coating method.

The thickness of the antifouling coating film can be suitably selected depending on the type of an object onto which the coating film is formed, the navigation speed of a ship, the seawater temperature and the like. Usually, in the coating process, 30 to 400 $\mu$m is provided per coating process, preferably 30 to 200 $\mu$m. Coating process is performed for a plurality of times, and suitable final film thickness is 100 to 1000 $\mu$m.

The coated object of the present invention has the antifouling coating film on its surface. The coated object can have the antifouling coating film on its entire surface, or on its partial surface.

The antifouling coating film of the present invention formed by using the antifouling coating composition maintains coating film property in seawater and stably elutes the antifouling agent for a long period of time, thereby exhibits the desired antifouling effect sufficiently.

## EXAMPLES

Examples and the like are provided hereinafter, and further clarifies characteristics of the present invention. The present invention, however, is not limited to these Examples.

The weight-average molecular weight (Mw) was determined by GPC (using a polystyrene standard), and GPC was performed under the following conditions.

Equipment: HLC-8220GPC (available from Tosoh Corporation)
Column: TSKgel Super HZM-M (available from Tosoh Corporation), two columns used
Flow rate: 0.35 mL/min
Detector: RI
Column thermostat temperature: 40°C
Developing solvent: THF

The abbreviations used in the following production examples represent the following compounds.

AA : adipic acid
SA : sebacic acid
PA : orthophthalic acid
IPA : isophthalic acid
CL : ε-caprolactone
VL : δ-valerolactone
LL : L-lactide
DLL : DL-lactide
GL : glycolide
1,4 BD : 1,4-butanediol
1,3 PD : 1,3-propanediol
HD : 1,6-hexanediol
NPG : neopentyl glycol
MPD : 3-methyl-1,5-pentanediol
PD9 : 2,4-diethyl-1,5-pentanediol
EG : ethylene glycol
IPDI : isophorone diisocyanate
TDI : tolylene diisocyanate
MDI : 4,4'-diphenylmethane diisocyanate
ICPTES : 3-(triethoxysilyl)propyl isocyanate
ICPTMS : 3-(trimethoxysilyl)propyl isocyanate
SANNIX PP-2000 : available from Sanyo Chemical Industries, Ltd., polypropylene glycol, hydroxyl group value 56.0 mg·KOH/g
SANNIX PP-4000 : available from Sanyo Chemical Industries, Ltd., polypropylene glycol, hydroxyl group value 27.4 mg·KOH/g

1. Production Example

<Production Example 1 (Production of Polyester Polyol a1-1)>

First, 146g of AA and 131g of 1,4BD were charged to a reactor, and esterification reaction was performed by agitation under ordinary pressure at 200°C, with distillation of generated water. When generation of water decreased, 0.02g (70 ppm) of tetraisopropyltitanate was added, and the reaction was continued under reduced pressure of 200 to 100 mmHg. When the acid value reached 1.0 mg KOH/g, degree of vacuum was raised using a vacuum pump, thereby completing the reaction. The hydroxyl group value of the polyester polyol obtained was 113.7 mg KOH/g, and the acid value thereof was 0.2 mg KOH/g, and Mw (measured by GPC) was 3000. Hereinafter, the polyester polyol obtained is abbreviated as polyester polyol a1-1. Here, the acid value is a value measured in accordance with Analysis Method 2.3.1-2013, and the hydroxyl group value is a value measured in accordance with Analysis Method 2.3.6.2-1996.

<Production Examples 2 to 5, 7, 8, 13 to 17 (Production of Polyester Polyols a1-2 to a1-5, a1-7, a1-8, a1-13 to a1-17)>

Acid components and polyalcohols shown in Table 1 were used, and the amount of the material charged was arbitrarily adjusted. The rest of the production conditions were the same as the production example 1. Accordingly, esterification reactions were performed to obtain corresponding polyester polyols. Hereinafter, each of the polyester polyols obtained in Production Examples 2 to 5, 7, 8, and 13 to 17 are abbreviated as polyester polyols a1-2 to a1-5, a1-7, a1-8, and a1-13 to a1-17, respectively. The result of analysis conducted for the properties of the obtained polyester polyols are shown in Table 1.

<Production Example 6 (Production of Polyester Polyol a1-6)>

First, 159.6g of CL, 60g of VL, 26g of NPG, and 0.01g of tetrabutyl titanate were charged to a reactor, and reaction was performed at 170°C for 4 hours. The hydroxyl group value of the obtained polyester polyol was 110.2 mg KOH/g, and the acid value thereof was 0.05 mg KOH/g, Mw (measured by GPC) thereof was 3000. Hereinafter, the polyester polyol obtained is abbreviated as polyester polyol a1-6.

<Production Examples 9 to 12 (Production of Polyester Polyols a1-9 to a1-12)>

Lactone compound, cyclic ester and polyalcohol shown in Table 1 were used, and the amount of the material charged was arbitrarily adjusted. The rest of the production conditions were the same as the Production Example 6. Accordingly, esterification reaction was performed to obtain each of the corresponding polyester polyol. Hereinafter, the polyester polyol obtained in each of the Production Examples 9 to 12 is abbreviated as polyester polyols a1-9 to a1-12, respectively. The result of analysis conducted for the properties of the obtained polyester polyols are shown in Table 1.

[Table 1]

Table 1

| Production Example | polyester polyol | acid component or lactone, cyclic ester | polyalcohol | hydroxyl group value (mg·KOH/g) | acid value (mg·KOH/g) | Mw (GPC measurement) |
|---|---|---|---|---|---|---|
| 1 | a1-1 | AA | 1,4BD | 113.7 | 0.20 | 3000 |
| 2 | a1-2 | SA | 1,3PD | 114.7 | 0.18 | 3400 |
| 3 | a1-3 | AA | HD(70), NPG(30) | 56.4 | 0.12 | 6400 |
| 4 | a1-4 | AA | MPD | 57.1 | 0.25 | 6000 |
| 5 | a1-5 | AA(80), PA(20) | 1,4BD | 112.0 | 0.21 | 3500 |
| 6 | a1-6 | CL(70), VL(30) | NPG | 110.2 | 0.05 | 3000 |
| 7 | a1-7 | AA | PD9 | 56.0 | 0.05 | 5300 |
| 8 | a1-8 | PA | HD | 53.3 | 0.07 | 4300 |
| 9 | a1-9 | CL | EG | 112.9 | 0.09 | 2900 |
| 10 | a1-10 | CL(90), LL(10) | EG | 112.5 | 0.10 | 2900 |
| 11 | a1-11 | CL(70), DLL(30) | EG | 112.1 | 0.09 | 3000 |
| 12 | a1-12 | CL(80), GL(20) | EG | 113.3 | 0.09 | 3000 |
| 13 | a1-13 | AA | MPD | 18.5 | 0.21 | 18600 |
| 14 | a1-14 | IPA(50), AA(50) | HD | 64.6 | 0.19 | 5400 |
| 15 | a1-15 | SA(80), IPA(20) | 1,3PD | 110.0 | 0.15 | 3500 |
| 16 | a1-16 | AA(50), IPA(50) | MPD | 113.7 | 0.14 | 2700 |

(continued)

| Production Example | polyester polyol | acid component or lactone, cyclic ester | polyalcohol | hydroxyl group value (mg·KOH/g) | acid value (mg·KOH/g) | Mw (GPC measurement) |
|---|---|---|---|---|---|---|
| 17 | a1-17 | AA | EG(60), 1,4BD(40) | 113.5 | 0.11 | 3000 |
| note: numbers in the parenthesis represent mixed molar ratio | | | | | | |

<Production Example A1-1 (Production of Terminal Silane-Modified Resin Solution A1-1)>

First, 82.5 g of polyester polyol a1-1 and 14.9 g of IPDI (isocyanate index : 0.8) were charged to a reactor. The mixture was agitated under nitrogen atmosphere at 80 to 90°C for 1 hour. Subsequently, 0.02 g of dibutyltin dilaurate was added, and the temperature was raised gradually to 100 to 105 °C. During the process, 5 g of toluene was added to alleviate extreme increase in viscosity. The reaction was carried out for 4 hours in total, thereby performing the urethanization reaction. Disappearance of the absorption peak of the isocyanate group at 2270 $cm^{-1}$ was confirmed by FT-IR. Accordingly, polyaddition of polyester polyol (a1) and IPDI resulted in polyurethane polyol (a2) having increased molecular weight, and polyol (A) including polyurethane polyol (a2) was obtained.

Thereafter, the reaction mixture was cooled to 80 °C, and 20 g of toluene and 2.5 g of ICPTES (silane modification ratio : 0.3) were added, followed by agitation at 80 to 90 °C for 1 hour. Disappearance of the absorption peak of the isocyanate group at 2270 $cm^{-1}$ was confirmed by FT-IR. Accordingly, a solution of terminal silane-modified resin (A1) in which a part of the hydroxyl group in the polyol (A) is modified by the silane coupling agent (sc) was obtained.

The solution obtained by the afore-mentioned process was diluted and dissolved with toluene so that the non-volatile content would be 60%. The non-volatile content of the obtained terminal silane-modified resin solution was 60.1%, and Mw (measured by GPC) was 20000. The terminal silane-modified resin solution obtained is hereinafter referred to as terminal silane-modified resin solution A1-1.

<Production Examples A1-2 to A1-21, A1-23 to A1-30 (Production of Terminal Silane-Modified Resin Solutions A1-2 to A1-21, A1-23 to A1-30)>

Polyester polyol and/or polyether polyol and polyisocyanate compound shown in Table 2 were used, and the charged amount were adjusted to have a predetermined isocyanate index. The amount of toluene added during the reaction was adjusted in the range of 5 to 20 g. As shown in Table 2, the type and amount of the silane coupling agent charged was altered in accordance with the predetermined silane modification ratio, and the other conditions were the same as the Production Example A1-1. Accordingly, terminal silane-modified resin solution was obtained. Hereinafter, each of the terminal silane-modified resin solutions obtained by Production Examples A1-2 to A1-21, A1-23 to A1-30 is referred to as terminal silane-modified resin solutions A1-2 to A1-21, A1-23 to A1-30, respectively. The analytical values of the obtained terminal silane-modified resin solutions are shown together in Table 2.

<Production Examples A1-22, A1-31, A1-32 (Production of Terminal Silane-Modified Resin Solutions A1-22, A1-31, A1-32)>

As shown in Table 2, polyester polyol or polyether polyol, 20 g of toluene, and ICPTES were charged to a reactor. The mixture was agitated under nitrogen atmosphere at 80 to 90°C for 30 minutes. Subsequently, 0.02 g of dibutyltin dilaurate was added, and agitation was further carried out for 30 minutes to perform the urethanization reaction. Disappearance of the absorption peak of the isocyanate group at 2270 $cm^{-1}$ was confirmed by FT-IR. Accordingly, a solution of the terminal silane-modified resin (A1) having a part of the hydroxyl group in the polyol (A) modified with a silane coupling agent (sc) was obtained.

The solution obtained was diluted and dissolved with toluene so that the non-volatile content would be 60%. Each of the terminal silane-modified resin solution obtained in the Production Examples A1-22, A1-31, and A1-32 is hereinafter referred to as terminal silane-modified resin solution A1-22, A1-31, and A1-32, respectively. The analytical values of the obtained terminal silane-modified resin solutions are shown together in Table 2.

[Table 2]

Table 2

| Production Example | terminal silane-modified resin solution | polyol (A) | | | | modification of terminal silane | | analytical value of obtained terminal silane-modified resin solution | |
|---|---|---|---|---|---|---|---|---|---|
| | | polyester polyol | polyether polyol | polyisocyanate compound | isocyanate index | silane coupling agent | silane modification ratio | non-volatile content (%) | Mw (GPC measurement) |
| A1-1 | A1-1 | a1-1 (82.5) | - | IPDI (14.9) | 0.80 | ICPTES (2.5) | 0.30 | 60.1 | 20000 |
| A1-2 | A1-2 | a1-2 (84.5) | - | TDI (12.0) | 0.80 | ICPTES (3.4) | 0.40 | 60.0 | 21000 |
| A1-3 | A1-3 | a1-2 (82.5) | - | TDI (11.8) | 0.80 | ICPTES (5.8) | 0.70 | 60.0 | 21200 |
| A1-4 | A1-4 | a1-2 (81.0) | - | TDI (11.5) | 0.80 | ICPTES (7.8) | 0.95 | 60.0 | 21500 |
| A1-5 | A1-5 | a1-2 (80.0) | - | MDI (16.4) | 0.80 | ICPTES (4.1) | 0.50 | 60.0 | 22000 |
| A1-6 | A1-6 | a1-2 (85.5) | - | TDI (13.4) | 0.88 | ICPTES (1.0) | 0.20 | 60.0 | 30000 |
| A1-7 | A1-7 | a1-3 (91.0) | - | TDI (5.6) | 0.70 | ICPTES (3.4) | 0.50 | 60.2 | 19000 |
| A1-8 | A1-8 | a1-4 (90.0) | - | TDI (5.6) | 0.70 | ICPTES (4.8) | 0.70 | 60.1 | 20000 |
| A1-9 | A1-9 | a1-5 (82.0) | - | IPDI (14.6) | 0.80 | ICPTES (3.2) | 0.40 | 60.0 | 20000 |
| A1-10 | A1-10 | a1-6 (84.0) | - | TDI (11.5) | 0.80 | ICPTES (4.1) | 0.50 | 60.3 | 21000 |
| A1-11 | A1-11 | a1-7 (90.5) | - | TDI (5.5) | 0.70 | ICPTMS (3.9) | 0.70 | 59.8 | 22000 |
| A1-12 | A1-12 | a1-7 (91.0) | - | TDI (7.1) | 0.90 | ICPTMS (1.8) | 0.95 | 60.0 | 36300 |

(continued)

| Production Example | terminal silane-modified resin solution | polyol (A) | | | | modification of terminal silane | | analytical value of obtained terminal silane-modified resin solution | |
|---|---|---|---|---|---|---|---|---|---|
| | | polyester polyol | polyether polyol | polyisocyanate compound | isocyanate index | silane coupling agent | silane modification ratio | non-volatile content (%) | Mw (GPC measurement) |
| A1-13 | A1-13 | a1-8 (93.0) | - | TDI (5.4) | 0.70 | ICPTMS (1.6) | 0.30 | 60.1 | 21000 |
| A1-14 | A1-14 | a1-9 (86.5) | - | TDI (12.1) | 0.80 | ICPTMS ( 1.4) | 0.20 | 59.9 | 22000 |
| A1-15 | A1-15 | a1-9 (84.0) | - | TDI (11.8) | 0.80 | ICPTES (4.2) | 0.50 | 60.0 | 22300 |
| A1-16 | A1-16 | a1-9 (82.0) | - | TDI (11.5) | 0.80 | ICPTES (6.5) | 0.80 | 60.1 | 22500 |
| A1-17 | A1-17 | a1-9 (81.0) | - | MDI (16.3) | 0.80 | ICPTES (2.4) | 0.30 | 60.3 | 23000 |
| A1-18 | A1-18 | a1-9 (86.0) | - | TDI (13.3) | 0.88 | ICPTMS (0.9) | 0.20 | 60.3 | 31000 |
| A1-19 | A1-19 | a1-10 (85.5) | - | TDI(11.9) | 0.80 | ICPTES (2.5) | 0.30 | 60.2 | 21000 |
| A1-20 | A1-20 | a1-11 (85.0) | - | TDI(11.8) | 0.80 | ICPTES (3.4) | 0.40 | 60.0 | 20000 |
| A1-21 | A1-21 | a1-12 (86.0) | - | TDI(12.1) | 0.80 | ICPTES (1.7) | 0.20 | 60.3 | 19000 |
| A1-22 | A1-22 | a1-13 (96.0) | - | - | - | ICPTES (3.9) | 0.50 | 60.2 | 21600 |
| A1-23 | A1-23 | a1-13 (97.0) | - | TDI(1.4) | 0.50 | ICPTES (2.0) | 0.50 | 59.8 | 38600 |
| A1-24 | A1-24 | a1-14 (90.0) | - | TDI(6.3) | 0.70 | ICPTES (3.8) | 0.50 | 60.0 | 16000 |

(continued)

| Production Example | terminal silane-modified resin solution | polyol (A) | | | | modification of terminal silane | | analytical value of obtained terminal silane-modified resin solution | |
|---|---|---|---|---|---|---|---|---|---|
| | | polyester polyol | polyether polyol | polyisocyanate compound | isocyanate index | silane coupling agent | silane modification ratio | non-volatile content (%) | Mw (GPC measurement) |
| A1-25 | A1-25 | a1-15 (84.0) | - | TDI(11.5) | 0.80 | ICPTES (4.9) | 0.60 | 60.2 | 21200 |
| A1-26 | A1-26 | a1-16 (82.0) | - | TDI(12.3) | 0.85 | ICPTES (5.9) | 0.95 | 59.8 | 25500 |
| A1-27 | A1-27 | a1-17 (84.0) | - | TDI(11.8) | 0.80 | ICPTES (4.2) | 0.50 | 59.9 | 19700 |
| A1-28 | A1-28 | - | SANNIX PP-2000(91.5) | TDI(6.4) | 0.80 | ICPTES (2.3) | 0.50 | 60.1 | 38000 |
| A1-29 | A1-29 | a1-2 (69.0) | SANNIX PP-2000(15.7) | TDI(10.9) | 0.80 | ICPTES (4.1) | 0.50 | 60.1 | 20000 |
| A1-30 | A1-30 | a1-7 (45.5) | SANNIX PP-2000(45.5) | TDI(6.7) | 0.85 | ICPTES (2.4) | 0.70 | 60.0 | 31500 |
| A1-31 | A1-31 | - | SANNIX PP-2000(95.0) | - | - | ICPTES (11.7 | 0.50 | 60.1 | 3600 |
| A1-32 | A1-32 | - | SANNIX PP-4000(90.5) | - | - | ICPTES (10.3 | 0.95 | 59.9 | 8200 |
| note: numbers in the parenthesis represent charged amount (g) | | | | | | | | | |

2. Examples and Comparative Examples

<Examples 1 to 30 and Comparative Examples 1 to 5 (Production of Coating Composition)>

In accordance with the coating formulations 1 to 5 shown in Table 3, each of the materials of the antifouling coating composition in which only the resin solution was altered as shown in Table 4 were formulated. The formulation was then mixed and dispersed with glass beads having a diameter of 1.5 to 2.5 mm. Accordingly, antifouling coating compositions of Examples 1 to 30 and Comparative Examples 1 to 4 were produced as shown in Tables 4 and 5.

Here, regarding Comparative Example 5 shown in Table 5, antifouling coating composition was produced with the similar process by using the resin solution shown in Table 5, and the coating formulations in accordance with 2' and 3' shown in Table 3.

Results of the tests are shown together in Tables 4 and 5.

[Table 3]

| Table 3 | | coating formulation (g) | | | | | | |
|---|---|---|---|---|---|---|---|---|
| | | 1 | 2 | 3 | 4 | 5 | 2' | 3' |
| antifouling coating composition | resin solution (60% solids) | 29.2 | 71.7 | 68.2 | 38.0 | 36.0 | 71.7 | 68.2 |
| | calcium sulfate anhydrite | 1.0 | 1.0 | 1.0 | 1.0 | 1.0 | 1.0 | 1.0 |
| | hydrophobic fumed silica | | 1.0 | 1.0 | | | 1.0 | 1.0 |
| | cuprous oxide | 30.0 | | 10.0 | | | | 10.0 |
| | zinc oxide | 14.0 | | | 30.0 | 28.0 | | |
| | red iron oxide | 3.5 | 10.0 | 5.0 | 5.0 | 5.0 | 10.0 | 5.0 |
| | talc | 7.0 | | | 3.0 | 3.0 | | |
| | titanium oxide | 1.0 | | | | | | |
| | copper pyrithione | 2.0 | 7.5 | 2.2 | | | 7.5 | 2.2 |
| | zinc pyrithione | | | | 4.0 | 4.0 | | |
| | Tralopyril | | | 2.0 | 5.0 | 5.0 | | 2.0 |
| | DCOIT (30% solution) | | | 1.5 | | | | 1.5 |
| | Medetomidine | | | 0.3 | | | | 0.3 |
| | polysiloxane having side chain modified with methyl phenyl | | 3.3 | 3.3 | | 2.5 | 3.3 | 3.3 |
| | polysiloxane having side chain modified with polyoxyethylene-polyoxypropylene | | 5.3 | 5.3 | | 4.0 | 5.3 | 5.3 |
| | polyamide wax | 0.4 | 0.2 | 0.2 | 0.4 | 0.4 | 0.2 | 0.2 |
| | polyethylene oxide | 0.6 | | | 0.6 | 0.6 | | |
| | mixture solvent of xylene/butyl acetate = 3/1 | 11.3 | | | 13.0 | 10.5 | | |
| catalyst | dibutyl bis(2,4-pentanedionatotin(IV | 0.5 | 1.0 | 1.0 | 0.5 | 0.5 | 1.0 | 1.0 |
| crosslinker | partially hydrolyzed polycondensation product of tetraethoxy silane | | | | | | 2.5 | 2.5 |
| total | | 100.5 | 101.0 | 101.0 | 100.5 | 100.5 | 103.5 | 103.5 |

The details of the components shown in Table 3 are as follows.

calcium sulfate anhydrite: D-1N (available from NORITAKE CO., LIMITED)
hydrophobic fumed silica: AEROSIL R974 (available from Evonik Industries AG)
cuprous oxide: NC-301 (available from NISSIN CHEMCO)
zinc oxide: zinc oxide II (available from Seido Chemical Industry Co., Ltd.)
red iron oxide: BENGARA KINGYOKU A-TYPE (available from MORISHITA BENGARA KOGYO CO., LTD)
talc: Crown Talc 3S (available from Matsumura Sangyo Co., Ltd.)
titanium oxide: FR-41 (available from FURUKAWA CO., LTD.)
copper pyrithione: (available from Lonza Group AG)
zinc pyrithione: (available from Lonza Group AG)
Tralopyril: ECONIA (available from JANSSEN PMP)
DCOIT (30% solution): SEA-NINE 211N (available from The Dow Chemical Company)
Medetomidine: selektope (available from I-Tech AB)
polysiloxane having side chain modified with methylphenyl: KF-50-100cs (available from Shin-Etsu Chemical Co., Ltd.)
polysiloxane having side chain modified with polyoxyethylene-polyoxypropylene: KF-6020 (available from Shin-Etsu Chemical Co., Ltd.)
polyamide wax: Disparlon A603-20X (available from Kusumoto Chemicals, Ltd.)
polyethylene oxide: Disparlon 4200-20 (available from Kusumoto Chemicals, Ltd.)
mixture solvent of xylene/butyl acetate = 3/1
dibutyl bis(2,4-pentanedionato)tin(IV): NEOSTANN U-220H (available from Nitto Kasei Co., Ltd.)
partially hydrolyzed polycondensation product of tetraethoxy silane: TES40 WN (available from Wacker Chemie AG)

[Table 4]

| Table 4 | | | Example | | | | | | | | | | | | | | | | | |
|---|---|---|---|---|---|---|---|---|---|---|---|---|---|---|---|---|---|---|---|---|
| | | | 1 | 2 | 3 | 4 | 5 | 6 | 7 | 8 | 9 | 10 | 11 | 12 | 13 | 14 | 15 | 16 | 17 | 18 |
| formulated resin solution | | | A1-1 | A1-2 | A1-3 | A1-4 | A1-5 | A1-6 | A1-7 | A1-8 | A1-9 | A1-10 | A1-11 | A1-12 | A1-13 | A1-14 | A1-15 | A1-16 | A1-17 | A1-18 |
| coating formulation 1 | adhesive property test | | 3 | 3 | 3 | 3 | 3 | 3 | 3 | 3 | 3 | 3 | 3 | 3 | 3 | 3 | 3 | 3 | 3 | 3 |
| | antifouling property test | after 6 months | 4 | 5 | 5 | 5 | 4 | 5 | 5 | 4 | 5 | 5 | 4 | 4 | 4 | 5 | 4 | 5 | 4 | 5 |
| | | after 12 months | 4 | 4 | 4 | 4 | 4 | 4 | 4 | 3 | 4 | 4 | 3 | 3 | 3 | 4 | 4 | 4 | 4 | 4 |
| | | after 24 months | 3 | 4 | 3 | 3 | 4 | 3 | 3 | 2 | 3 | 4 | 2 | 3 | 2 | 3 | 3 | 4 | 3 | 3 |
| coating formulation 2 | adhesive property test | | 3 | 3 | 3 | 3 | 3 | 3 | 3 | 3 | 3 | 3 | 3 | 3 | 3 | 3 | 3 | 3 | 3 | 3 |
| | antifouling property test | after 6 months | 5 | 5 | 4 | 5 | 5 | 4 | 5 | 5 | 5 | 5 | 5 | 4 | 5 | 5 | 5 | 5 | 5 | 4 |
| | | after 12 months | 4 | 4 | 4 | 4 | 4 | 4 | 4 | 4 | 4 | 4 | 4 | 4 | 4 | 4 | 4 | 4 | 4 | 4 |
| | | after 24 months | 4 | 4 | 4 | 4 | 4 | 4 | 4 | 4 | 4 | 4 | 4 | 4 | 4 | 4 | 4 | 4 | 4 | 4 |
| coating formulation 3 | adhesive property test | | 3 | 3 | 3 | 3 | 3 | 3 | 3 | 3 | 3 | 3 | 3 | 3 | 3 | 3 | 3 | 3 | 3 | 3 |
| | antifouling property test | after 6 months | 4 | 5 | 5 | 5 | 4 | 5 | 5 | 5 | 5 | 5 | 4 | 5 | 5 | 4 | 5 | 4 | 5 | 5 |
| | | after 12 months | 4 | 4 | 4 | 4 | 4 | 4 | 4 | 4 | 4 | 4 | 4 | 4 | 4 | 4 | 4 | 4 | 4 | 4 |
| | | after 24 months | 4 | 4 | 4 | 4 | 4 | 4 | 4 | 4 | 4 | 4 | 4 | 4 | 4 | 4 | 4 | 4 | 4 | 4 |
| coating formulation 4 | adhesive property test | | 3 | 3 | 3 | 3 | 3 | 3 | 3 | 3 | 3 | 3 | 3 | 3 | 3 | 3 | 3 | 3 | 3 | 3 |
| | antifouling property test | after 6 months | 4 | 5 | 5 | 5 | 4 | 5 | 5 | 4 | 5 | 5 | 4 | 4 | 4 | 5 | 4 | 4 | 4 | 5 |
| | | after 12 months | 3 | 4 | 4 | 4 | 4 | 4 | 4 | 3 | 4 | 4 | 3 | 3 | 3 | 4 | 4 | 3 | 3 | 4 |
| | | after 24 months | 2 | 4 | 3 | 3 | 4 | 3 | 3 | 2 | 3 | 4 | 2 | 3 | 2 | 3 | 3 | 2 | 2 | 3 |
| coating formulation 5 | adhesive property test | | 3 | 3 | 3 | 3 | 3 | 3 | 3 | 3 | 3 | 3 | 3 | 3 | 3 | 3 | 3 | 3 | 3 | 3 |
| | antifouling property test | after 6 months | 5 | 5 | 5 | 5 | 4 | 5 | 4 | 4 | 5 | 5 | 4 | 4 | 4 | 5 | 4 | 5 | 4 | 5 |
| | | after 12 months | 3 | 4 | 4 | 4 | 4 | 4 | 4 | 3 | 4 | 4 | 3 | 3 | 3 | 4 | 4 | 3 | 3 | 4 |
| | | after 24 months | 2 | 4 | 3 | 3 | 4 | 3 | 3 | 2 | 3 | 4 | 2 | 3 | 2 | 3 | 3 | 2 | 2 | 3 |
| coating formulation 2' | adhesive property test | | - | - | - | - | - | - | - | - | - | - | - | - | - | - | - | - | - | - |
| | antifouling property test | after 6 months | - | - | - | - | - | - | - | - | - | - | - | - | - | - | - | - | - | - |
| | | after 12 months | - | - | - | - | - | - | - | - | - | - | - | - | - | - | - | - | - | - |
| | | after 24 months | - | - | - | - | - | - | - | - | - | - | - | - | - | - | - | - | - | - |
| coating formulation 3' | adhesive property test | | - | - | - | - | - | - | - | - | - | - | - | - | - | - | - | - | - | - |
| | antifouling property test | after 6 months | - | - | - | - | - | - | - | - | - | - | - | - | - | - | - | - | - | - |
| | | after 12 months | - | - | - | - | - | - | - | - | - | - | - | - | - | - | - | - | - | - |
| | | after 24 months | - | - | - | - | - | - | - | - | - | - | - | - | - | - | - | - | - | - |

[Table 5]

| Table 5 | | | Example | | | | | | | | | | | | Comparative Example | | | | |
|---|---|---|---|---|---|---|---|---|---|---|---|---|---|---|---|---|---|---|---|
| | | | 19 | 20 | 21 | 22 | 23 | 24 | 25 | 26 | 27 | 28 | 29 | 30 | 1 | 2 | 3 | 4 | 5 |
| formulated resin solution | | | A1-19 | A1-20 | A1-21 | A1-22 | A1-23 | A1-24 | A1-25 | A1-26 | A1-27 | A1-28 | A1-29 | A1-30 | A1-31 | A1-32 | a1-13soln | GENIOSILsoln | DMS-S35soln |
| coating formulation 1 | adhesive property test | | 3 | 3 | 3 | 3 | 3 | 3 | 3 | 3 | 3 | 3 | 3 | 3 | 3 | 3 | 3 | 3 | - |
| | antifouling property test | after 6 months | 5 | 4 | 5 | 4 | 4 | 5 | 5 | 4 | 4 | 3 | 4 | 3 | 3 | 2 | 5 | 3 | - |
| | | after 12 months | 4 | 4 | 4 | 3 | 3 | 4 | 4 | 3 | 4 | 2 | 3 | 2 | 2 | 1 | 3 | 1 | - |
| | | after 24 months | 4 | 3 | 3 | 2 | 2 | 3 | 3 | 2 | 3 | 2 | 2 | 2 | 1 | - | 1 | - | - |
| coating formulation 2 | adhesive property test | | 3 | 3 | 3 | 3 | 3 | 3 | 3 | 3 | 3 | 3 | 3 | 3 | 3 | 3 | 3 | 3 | - |
| | antifouling property test | after 6 months | 5 | 4 | 5 | 5 | 5 | 4 | 5 | 5 | 5 | 4 | 4 | 4 | 3 | 3 | 3 | 4 | - |
| | | after 12 months | 4 | 4 | 4 | 4 | 4 | 4 | 4 | 4 | 4 | 3 | 4 | 4 | 1 | 2 | 1 | 2 | - |
| | | after 24 months | 4 | 4 | 4 | 4 | 4 | 4 | 4 | 4 | 4 | 3 | 3 | 3 | - | 1 | - | 1 | - |
| coating formulation 3 | adhesive property test | | 3 | 3 | 3 | 3 | 3 | 3 | 3 | 3 | 3 | 3 | 3 | 3 | 3 | 3 | 3 | 3 | - |
| | antifouling property test | after 6 months | 5 | 5 | 4 | 5 | 5 | 5 | 5 | 5 | 4 | 5 | 5 | 4 | 3 | 4 | 3 | 4 | - |
| | | after 12 months | 4 | 4 | 4 | 4 | 4 | 4 | 4 | 4 | 4 | 4 | 4 | 4 | 2 | 3 | 1 | 3 | - |
| | | after 24 months | 4 | 4 | 4 | 4 | 4 | 4 | 4 | 4 | 4 | 3 | 3 | 3 | 1 | 1 | - | 2 | - |

(continued)

| Table 5 | | | Example | | | | | | | | | | | | Comparative Example | | | | |
|---|---|---|---|---|---|---|---|---|---|---|---|---|---|---|---|---|---|---|---|
| | | | 19 | 20 | 21 | 22 | 23 | 24 | 25 | 26 | 27 | 28 | 29 | 30 | 1 | 2 | 3 | 4 | 5 |
| formulated resin solution | | | A1-19 | A1-20 | A1-21 | A1-22 | A1-23 | A1-24 | A1-25 | A1-26 | A1-27 | A1-28 | A1-29 | A1-30 | A1-31 | A1-32 | a1-13soln | GENIOSILsoln | DMS-S35soln |
| coating formulation 4 | adhesive property test | | 3 | 3 | 3 | 3 | 3 | 3 | 3 | 3 | 3 | 3 | 3 | 3 | 3 | 3 | 3 | 3 | - |
| | antifouling property test | after 6 months | 5 | 4 | 5 | 4 | 4 | 5 | 4 | 4 | 4 | 3 | 4 | 4 | 3 | 2 | 4 | 4 | - |
| | | after 12 months | 4 | 3 | 4 | 3 | 3 | 4 | 3 | 3 | 4 | 3 | 3 | 3 | 1 | 1 | 2 | 2 | - |
| | | after 24 months | 4 | 2 | 3 | 2 | 2 | 3 | 2 | 2 | 3 | 2 | 3 | 2 | - | - | 1 | 1 | - |
| coating formulation 5 | adhesive property test | | 3 | 3 | 3 | 3 | 3 | 3 | 3 | 3 | 3 | 3 | 3 | 3 | 3 | 3 | 3 | 3 | - |
| | antifouling property test | after 6 months | 5 | 4 | 5 | 4 | 5 | 5 | 4 | 4 | 5 | 3 | 4 | 3 | 3 | 3 | 5 | 5 | - |
| | | after 12 months | 4 | 3 | 4 | 3 | 3 | 4 | 3 | 3 | 4 | 2 | 3 | 3 | 2 | 1 | 3 | 3 | - |
| | | after 24 months | 4 | 2 | 3 | 2 | 2 | 3 | 2 | 2 | 3 | 2 | 2 | 2 | 1 | - | 1 | 1 | - |
| coating formulation 2' | adhesive property test | | - | - | - | - | - | - | - | - | - | - | - | - | - | - | - | - | 1 |
| | antifouling property test | after 6 months | - | - | - | - | - | - | - | - | - | - | - | - | - | - | - | - | 5 |
| | | after 12 months | - | - | - | - | - | - | - | - | - | - | - | - | - | - | - | - | 4 |
| | | after 24 months | - | - | - | - | - | - | - | - | - | - | - | - | - | - | - | - | 4 |

(continued)

| Table 5 | | | Example | | | | | | | | | | | | Comparative Example | | | | |
|---|---|---|---|---|---|---|---|---|---|---|---|---|---|---|---|---|---|---|---|
| | | | 19 | 20 | 21 | 22 | 23 | 24 | 25 | 26 | 27 | 28 | 29 | 30 | 1 | 2 | 3 | 4 | 5 |
| formulated resin solution | | | A1-19 | A1-20 | A1-21 | A1-22 | A1-23 | A1-24 | A1-25 | A1-26 | A1-27 | A1-28 | A1-29 | A1-30 | A1-31 | A1-32 | a1-13soln | GENIOSILsoln | DMS-S35soln |
| coating formulation 3' | adhesive property test | | - | - | - | - | - | - | - | - | - | - | - | - | - | - | - | - | 1 |
| | antifouling property test | after 6 months | - | - | - | - | - | - | - | - | - | - | - | - | - | - | - | - | 5 |
| | | after 12 months | - | - | - | - | - | - | - | - | - | - | - | - | - | - | - | - | 4 |
| | | after 24 months | - | - | - | - | - | - | - | - | - | - | - | - | - | - | - | - | 4 |

The details of the resin solutions a1-13 soln, GENIOSIL soln, and DMS-S35 soln shown in Table 5 are as follows.

a1-13 soln: solution prepared by diluting polyester polyol a1-13 with toluene to have 60% solids
GENIOSIL soln: solution prepared by diluting polypropylene glycol having both terminals modified with trimethoxysilyl, product name "GENIOSIL STD-15" (available from Wacker Chemie AG) with xylene to have 60% solids
DMS-S35 soln: solution prepared by diluting polyorganosiloxane having silanol group at both terminals, Mw = 49000, product name "DMS-S35" (available from Gelest, Inc.) with xylene to have 60% solids

3. Test Example

With the antifouling coating composition of Examples and Comparative Examples, adhesive property test and antifouling property test were performed. Results are shown in Table 4 to Table 5.
From Table 4 to Table 5, it can be understood that coating film formed by using the coating formulations of the present invention (Examples 1 to 30) had superior adhesive property. Further, compared with the coating film formed by using the coating compositions of Comparative Examples 1 to 4, they also had less adhesion of fouling organisms such as shellfish and algae as a whole, or only partial adhesion was observed.
On the other hand, the coating film formed by using the coating compositions of Comparative Examples 1 to 4 was not able to prevent adhesion of fouling organisms.
Comparative Example 5 which is a silicone rubber based antifouling coating containing an antifouling agent showed superior antifouling property, however, adhesive property was inferior. Accordingly, a primer dedicated for silicone rubber was necessary, resulting in poor workability.

<Adhesive Property Test>

A hard vinyl chloride plate (110 x 60 x 2 mm) having an epoxy based primer HEMPADUR QUATTRO XO 17870 (available from HEMPEL A/S) applied thereon to have a dried film thickness of approximately 100 μm was prepared. Subsequently, the antifouling coating compositions obtained by Examples 1 to 30 and Comparative Examples 1 to 2, 4, and 5 were formulated with catalyst and crosslinker as shown in Table 3, followed by agitation with hand for approximately 30 seconds by using a stainless spatula. Immediately after the agitation, the formulation was applied on the hard vinyl chloride plate so as to have a dried film thickness of approximately 200 μm, followed by drying at room temperature (25 °C) for 48 hours, thereby obtaining the test plate.
Here, since the antifouling coating composition obtained in Comparative Example 3 uses a resin solution which do not have silane group, catalyst was not added, and only the antifouling coating composition was applied in a similar manner.
An X-shaped cut that reaches the antifouling coating was made using a cutter, and then the test plate was rubbed strongly with a finger in a direction perpendicular to the cut. The adhesive property of the coating film was evaluated in accordance with the following criteria.
3: coating film does not peel off
2: coating film peeled off partially around the cut
1: coating film peeled off easily

<Antifouling Property Test>

The antifouling coating compositions obtained by Examples 1 to 30 and Comparative Examples 1 to 2, and 4 were formulated with catalyst as shown in Table 3, followed by agitation with hand for approximately 30 seconds by using a stainless spatula. Immediately after the agitation, the formulation was coated on both sides of a hard vinyl chloride plate (100 x 200 x 2 mm) so as to have a dried film thickness of approximately 200 μm, the hard vinyl chloride plate having an epoxy based primer HEMPADUR QUATTRO XO 17870 (available from HEMPEL A/S) applied thereon to have a dried film thickness of approximately 100 μm.
Here, since the antifouling coating composition obtained in Comparative Example 3 uses a resin solution which do not have silane group, catalyst was not added, and only the antifouling coating composition was applied in a similar manner.
Regarding the antifouling coating composition obtained in Comparative Example 5, epoxy based primer HEMPADUR QUATTRO XO 17870 (available from HEMPEL A/S) was applied on a hard vinyl chloride plate (100 x 200 x 2 mm) so as to have a dried film thickness of approximately 100 μm. Further, silicone based tie coat HEMPASIL NEXUS X-TEND 27500 (available from HEMPEL A/S) was applied on the coating film of the epoxy based primer, so that the

dried film thickness would be approximately 100μm. Subsequently, the procedures were performed in a similar manner to apply the formulation on both sides of the hard vinyl chloride plate by adding a catalyst and crosslinker as shown in Table 3 so that the thickness of the dried coating film would be approximately 200μm.

The coated objects thus obtained were dried at room temperature (25 °C) for 48 hours to prepare the test plates. These test plates were immersed at 1.5 m below sea level in Owase City, Mie Prefecture, and the test plate fouling due to attached objects was examined after 6 months, 12 months and 24 months.

The state of the surface of the coating film was visually evaluated in accordance with criteria shown below.

5: Fouling organisms such as shellfish or algae do not attach, and slime hardly attaches.
4: Fouling organisms such as shellfish or algae do not attach, and slime thinly attaches (to the extent that the coating film surface is observable) and the slime can be removed when wiped softly with a brush.
3: Fouling organisms such as shellfish or algae do not attach, but slime thickly attaches (to the extent that the coating film surface is not observable) and the slime cannot be removed even when wiped strongly with a brush.
2: Fouling organisms such as shellfish or algae attach partially.
1: Fouling organisms such as shellfish or algae attach entirely.

## Claims

**1.** An antifouling coating composition comprising a terminal silane-modified resin (A1) and an antifouling agent (B); wherein:

the terminal silane-modified resin (A1) is structured by modifying a part of or all of hydroxyl group in polyol (A) with alkoxysilane;
the polyol (A) is one or more of polyester polyol (a1) and polyurethane polyol (a2); and
the polyurethane polyol (a2) is structured by polyaddition of polyester polyol (a1) and/or polyether polyol (c) with polyisocyanate compound (b).

**2.** The antifouling coating composition of Claim 1, wherein:

the polyol (A) includes polyurethane polyol (a2); and
the polyurethane polyol (a2) is obtained by urethanization reaction of the polyester polyol (a1) and the polyisocyanate compound (b) with a charging ratio to have an isocyanate index (NCO/OH) of 0.1 to 0.99.

**3.** The antifouling coating composition of Claim 1 or 2, wherein:
the polyester polyol (a1) is represented by the following formula (1) :

[Chemical Formula 1]

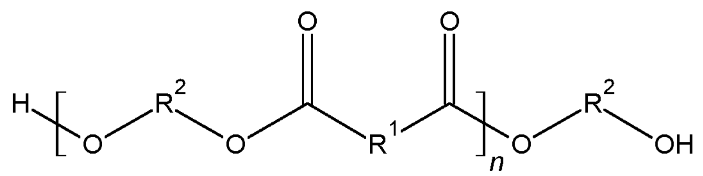

(1)

(wherein, n represents an integer of 1 to 100, $R^1$ can be the same or different from each other and represents alkylene group or phenylene group, $R^2$ can be the same or different from each other and represents alkylene group, or represents a group composed of polyethylene glycol or polypropylene glycol with 2 to 8 repeating units).

**4.** The antifouling coating composition of Claim 1 or 2, wherein:
the polyester polyol (a1) is represented by the following formula (2) :

[Chemical Formula 2]

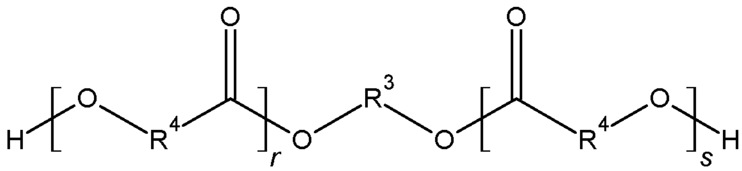

(2)

(wherein, r and s each represents an integer of 0 to 100, and satisfies the relation of r + s ≥ 1 1, $R^4$ contained by number of (r+s) are the same or different from each other, $R^3$ represents an alkylene group, $R^4$ represents an alkylene group having 2 to 5 carbon atoms).

**5.** The antifouling coating composition of any one of Claims 1 to 4, wherein:
the polyether polyol (c) is a product obtained by addition polymerization of one or more of propylene oxide and ethylene oxide by using polyalcohol including diol compound as initiator.

**6.** A coated object having on its surface an antifouling coating film formed by the antifouling coating composition of any one of Claims 1 to 5.

**INTERNATIONAL SEARCH REPORT**

International application No. PCT/JP2020/026354

**A. CLASSIFICATION OF SUBJECT MATTER**

C09D 5/16(2006.01)i; C09D 167/00(2006.01)i; C09D 167/02(2006.01)i; C09D 175/06(2006.01)i; C09D 175/08(2006.01)i; C09D 7/61(2018.01)i; C09D 7/63(2018.01)i

FI: C09D167/00; C09D175/06; C09D175/08; C09D5/16; C09D7/61; C09D7/63; C09D167/02

According to International Patent Classification (IPC) or to both national classification and IPC

**B. FIELDS SEARCHED**

Minimum documentation searched (classification system followed by classification symbols)

C09D5/16; C09D167/00; C09D167/02; C09D175/06; C09D175/08; C09D7/61; C09D7/63

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2014-514412 A (DOW GLOBAL TECHNOLOGIES LLC.) 19.06.2014 (2014-06-19) claims, paragraph [0080] (table 4), paragraph [0099] (table 7), examples | 1, 5-6 |
| Y | claims, paragraph [0080] (table 4), paragraph [0099] (table 7), examples | 3-4 |
| A | claims, paragraph [0080] (table 4), paragraph [0099] (table 7), examples | 2 |
| X | JP 2004-529208 A (C.R. BARD, INC.) 24.09.2004 (2004-09-24) claims, paragraphs [0033], [0069], [0136], examples | 1, 3-6 |
| Y | paragraph [0074] | 3-4 |
| A | claims, paragraphs [0033], [0069], [0136], examples | 2 |

☐ Further documents are listed in the continuation of Box C.  ☒ See patent family annex.

* Special categories of cited documents:

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| 03 September 2020 (03.09.2020) | 15 September 2020 (15.09.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2020/026354

| Patent Documents referred in the Report | Publication Date | Patent Family | Publication Date |
|---|---|---|---|
| JP 2014-514412 A | 19 Jun. 2014 | US 2014/0088219 A1 claims, tables 2, 5, examples<br>WO 2012/146023 A1<br>EP 2673319 A1<br>CN 102964974 A<br>CN 103492486 A<br>KR 10-2014-0027214 A | |
| JP 2004-529208 A | 24 Sep. 2004 | US 2003/0198821 A1 claims, paragraphs [0033], [0070], [0075], [0143], examples<br>WO 2001/053414 A1<br>EP 1228146 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP S5196830 A
- JP S5626272 B
- JP S6343973 A
- JP H3255169 A
- JP 2013515122 A